# DEMANDE DE BREVET EUROPEEN

(11) **EP 4 280 434 A1**
(43) Date de publication de la demande: **22.11.2023**
(21) Numéro de dépôt: 23173874.1
(22) Date de dépôt: 17.05.2023
(51) Int. Cl.: H02K 7/18

(54) **DISPOSITIF DE GÉNÉRATION D'ÉLECTRICITÉ RAPPORTABLE SUR UNE INSTALLATION DE CLIMATISATION ET INSTALLATION DE CLIMATISATION AMÉLIORÉE**

(30) Priorité: 19.05.2022 FR 2204804
(71) Demandeur: Star Light, 06000 Nice (FR)
(72) Inventeur: CHERNI, Slim, 42300 Roanne (FR)
(74) Mandataire: Hautier IP

(57) **Abrégé**

Dispositif de génération d'électricité par transduction électromagnétique (1) comprenant un premier aimant (2) comprenant une première polarité et une deuxième polarité opposée, une bobine (3), un deuxième aimant (4) comprenant une première polarité et une deuxième polarité opposée et un troisième aimant (5) comprenant une première polarité et une deuxième polarité opposée. La deuxième polarité du deuxième aimant étant positionné au regard de la deuxième polarité du premier aimant et la première polarité du troisième aimant étant positionnée au regard de la première polarité du premier aimant de manière à ce que la première polarité et la deuxième polarité du deuxième aimant soient opposées à celles du premier aimant et à ce que la première polarité et la deuxième polarité du troisième aimant soient opposées à celles du premier aimant.

## Description

### DOMAINE TECHNIQUE

La présente invention concerne le domaine des climatiseurs et pompes à chaleur. L'invention trouvera une application particulière pour la génération d'électricité permettant d'améliorer le rendement des climatiseurs ou des pompes à chaleur ou plus généralement d'un ventilateur. Elle trouve pour application particulièrement avantageuse le domaine de la production d'électricité par l'exploitation de flux d'air. L'invention peut s'appliquer sur des climatiseurs ou pompes à chaleur ou encore des ventilateurs déjà en service ou être prévue en usine sur des climatiseurs ou pompes à chaleur à installer.

### ETAT DE LA TECHNIQUE

Dans un contexte de réchauffement climatique et d'accroissement de la population urbaine, les besoins en froid pour les bâtiments tertiaires et pour des applications industrielles sont en constante augmentation.

Actuellement, plus de 1,6 milliard de climatiseurs sont installés dans le monde.

Les climatiseurs ou pompes à chaleur consomment de l'énergie et notamment de l'énergie électrique pour alimenter les compresseurs et les pompes. Bien que de nombreux progrès aient été réalisés, la recherche de dispositifs toujours plus économes se poursuit.

Une des voies de recherche est d'alimenter les installations de production d'air froid par de l'électricité produite à partir d'énergie renouvelable ou en recyclant certaines sources d'énergie. Notamment dans le cadre de ces installations, le flux d'air et éventuellement les vibrations de l'installation peuvent être utilisés à ces fins.

Il existe plusieurs solutions pour produire de l'électricité à partir de l'exploitation de flux d'air et notamment il existe la création d'une induction électromagnétique grâce aux ondes acoustiques produites par un flux d'air.

Le principe physique correspondant est la transduction électromagnétique qui met en oeuvre une bobine, un aimant et un système mécanique résonant. Le système mécanique résonant est fixé à la bobine ou à l'aimant et permet ainsi de mettre en mouvement la bobine par rapport à l'aimant ou inversement, ceci permettant de voir apparaitre une tension aux bornes de la bobine qui peut ainsi être réceptionnée. Il apparait que ces principes physiques ont conduit à de nombreuses solutions techniques, afin de permettre une production d'énergie plus respectueuse de l'environnement, c'est-à-dire utilisant des flux d'air ou des vibrations mécaniques initialement présents.

On connait par exemple, le document CN204304832, qui décrit une solution technique utilisant les vibrations du flux d'air sortant d'un ventilateur ou d'un système d'air conditionné pour actionner un transducteur électromagnétique.

Bien que cette solution présente un dispositif de génération d'électricité fonctionnel, il est nécessaire d'améliorer les caractéristiques de ces dispositifs pour optimiser cette récupération d'énergie et cette production d'électricité.

On connait par exemple, le document US2020373824A1 qui concerne un système de récupération d'énergie en utilisant un ou plusieurs mécanismes de transduction électromagnétique, piézoélectrique et électrostatique pour convertir un mouvement ou une vibration en énergie électrique. Ce système s'applique notamment dans le domaine des batteries pour appareils mobiles en convertissant les mouvements ou vibrations en énergie électrique. Ce système ne semble pas permettre un rendement optimal, la récupération et/ou la transformation des vibrations en énergie électrique pourraient être améliorées.

Un objet de la présente invention est donc de proposer un dispositif de génération d'énergie par transduction électromagnétique permettant de pouvoir s'affranchir des inconvénients précités. Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation, l'invention prévoit un dispositif de génération d'électricité par transduction électromagnétique comprenant un premier aimant comprenant une première polarité et une deuxième polarité opposée et une bobine caractérisé en ce qu'il comprend un deuxième aimant comprenant une première polarité et une deuxième polarité opposée et un troisième aimant comprenant une première polarité et une deuxième polarité opposée, la deuxième polarité du deuxième aimant étant positionné au regard de la deuxième polarité du premier aimant et la première polarité du troisième aimant étant positionnée au regard de la première polarité du premier aimant de manière à ce que la première polarité et la deuxième polarité du deuxième aimant soient opposées à la première polarité et la deuxième polarité du premier aimant et à ce que la première polarité et la deuxième polarité du troisième aimant soient opposées à la première polarité et à la deuxième polarité du premier aimant, le deuxième aimant est fixé à la bobine de sorte à suivre son déplacement et le troisième aimant est immobile par rapport à la bobine, la bobine et le deuxième aimant sont configurés pour être mobiles par rapport au premier aimant par des vibrations mécaniques, le premier aimant est configuré pour osciller entre le deuxième aimant et le troisième aimant.

Ainsi, ce dispositif de génération d'électricité en raison du positionnement de deux aimants supplémentaires permet de récupérer un maximum d'énergie et de produire une plus grande puissance électrique. Par ailleurs, étant donné qu'en raison de la solidarisation entre le deuxième aimant et la bobine et de leur mise en mouvement (alors que le troisième aimant est immobile), la distance entre le deuxième aimant et le troisième aimant est variable, ce qui entraine une augmentation de l'amplitude de déplacement du premier aimant entre le deuxième aimant et le troisième aimant et donc une production d'énergie électrique plus importante (en comparaison au cas où la distance entre le deuxième aimant et le troisième aimant ne serait pas modifiée par rapport à sa valeur initiale).

Selon un autre aspect, l'invention prévoit un système de génération d'électricité par transduction électromagnétique comprenant une pluralité de dispositifs de génération d'électricité par transduction électromagnétique montés en série ou en parallèle.

Selon un autre aspect, l'invention prévoit un boitier configuré pour être positionné au regard d'une unité extérieure de sortie d'air d'un climatiseur ou d'une pompe à chaleur ou d'un ventilateur comprenant une sortie d'air caractérisé en ce qu'il comprend un dispositif de génération d'électricité par transduction électromagnétique ou un système de génération d'électricité par transduction électromagnétique. Avantageusement, le boitier comprend quatre faces latérales, une face avant et une face arrière, la face avant étant positionnée au regard d'un flux d'air d'un climatiseur ou d'une pompe à chaleur ou d'un ventilateur.

Selon un autre aspect, l'invention concerne un boitier configuré pour être positionné au regard d'une unité extérieure de sortie d'air d'un climatiseur ou d'une pompe à chaleur ou d'une sortie d'air d'un ventilateur comprenant une sortie d'air caractérisé en ce qu'il comprend un dispositif de génération d'électricité par triboélectricité comprenant au moins un supercondensateur, le au moins un supercondensateur comprend une première armature et une deuxième armature et est configuré pour être placé au regard de l'unité extérieure de sortie d'air d'un climatiseur ou d'une pompe à chaleur ou d'un ventilateur.

Avantageusement, le boitier selon l'invention comprend un dispositif de génération d'électricité par transduction électromagnétique ou un système de génération d'électricité par transduction électromagnétique et un dispositif de génération d'électricité par triboélectricité comprenant au moins un supercondensateur. L'association de différents dispositifs de récupération d'énergie permet de d'optimiser la puissance produite par le flux d'air en sortie du climatiseur ou de la pompe à chaleur ou d'un ventilateur.

Selon un autre aspect, l'invention prévoit un climatiseur comprenant une unité extérieure caractérisée en ce qu'elle comprend un dispositif de génération d'électricité par transduction électromagnétique et/ou un dispositif de génération d'électricité par triboélectricité ou un système de génération d'électricité par transduction électromagnétique.

Selon un autre aspect, l'invention prévoit un climatiseur comprenant une unité extérieure caractérisée en ce qu'elle comprend un dispositif de génération d'électricité par transduction électromagnétique et un dispositif de génération d'électricité par triboélectricité qui sont agencés dans un boitier. Le climatiseur comprend un boitier tel que décrit ci-dessus.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente l'agencement des trois aimants avec la bobine du dispositif de génération d'électricité par transduction électromagnétique selon l'invention.
La figure 2 représente un supercondensateur d'un dispositif de génération d'électricité par triboélectricité selon l'invention.
La figure 3 représente une vue de face d'une membrane d'un dispositif de génération d'électricité par transduction électromagnétique et une cellule.
La figure 4 représente un dispositif de génération d'électricité par transduction électromagnétique joint à un dispositif de génération d'électricité par triboélectricité.
La figure 5 représente une pluralité de dispositifs de génération d'électricité par transduction électromagnétique et par triboélectricité, selon une vue de face avec au moins une armature d'un supercondensateur d'un dispositif de génération d'électricité par triboélectricité associés en série.
La figure 6 représente l'installation de climatisation ou de pompe à chaleur avec le dispositif de génération d'électricité par transduction électromagnétique et le dispositif de génération d'électricité par triboélectricité.

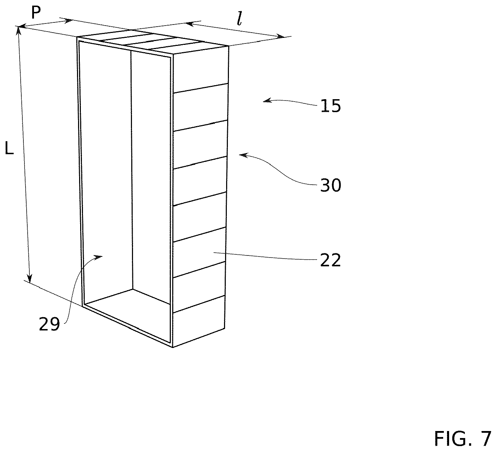

La figure 7 représente le boitier où sont représentées les faces dudit boitier.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement. Selon un exemple, la bobine 3 s'étend suivant un axe longitudinal 32 entre une première extrémité 7 de la bobine 3 et une deuxième extrémité 9 de la bobine 3, la bobine 3 comprend un noyau 28, le premier aimant 2, le deuxième aimant 4 et le troisième aimant 5 étant positionnés au moins en partie dans le noyau 28 de la bobine 3.

Selon un exemple, le dispositif de génération d'électricité par transduction électromagnétique 1 comprend une membrane 6 solidaire de la première extrémité 7 de la bobine 3.

Ainsi, étant donné la solidarisation entre la membrane 6 et la bobine 3, le mouvement de la membrane 6 entraîne le mouvement de la bobine 3. Préférentiellement, la membrane 6 est rigide. De manière préférée, la membrane 6 présente une épaisseur faible en comparaison à sa longueur et sa largeur. Il peut ainsi exister un facteur pouvant être compris entre 10 et 100 entre l'épaisseur de la membrane 6 et sa largeur et sa longueur. Avantageusement, la membrane 6 a une forme arrondie (c'est-à-dire une forme décrivant une demi-sphère) ou toutes autres formes présentant plusieurs faces lui permettant ainsi de réceptionner une quantité importante d'ondes acoustiques, comme par exemple une forme pyramidale, une forme cylindrique, une forme conique ou une forme polyédrique. La membrane 6 est fixée à la première extrémité 7 au niveau de sa partie centrale (c'est-à-dire au niveau de l'apex dans le cas notamment d'une demi-sphère) de manière que la membrane 6 entoure la bobine 3. La surface de la membrane 6 est égale ou supérieure à la surface de la section en coupe transversale de la bobine 3, la bobine 3 s'étendant selon un axe longitudinal 32 entre une première extrémité 7 et une deuxième extrémité 9. Cette configuration permet d'augmenter la surface de réception des vibrations mécaniques et par conséquence d'entrainer une mise en mouvement de la bobine 3 plus sensible. En effet, la forme de la membrane permet de former une surface de réception suffisamment étendue englobant ainsi l'espace de propagation des vibrations mécaniques se propageant à proximité de la première extrémité 7 de la bobine 3. Grâce à cette configuration, l'ensemble des forces exercées par les vibrations mécaniques sur la membrane et donc une force globale importante mettra en mouvement la bobine 3. Cette configuration est en effet avantageuse étant donné les faibles valeurs des puissances acoustiques des vibrations mécaniques misent en jeu dans le cadre de la présente invention. En effet, les ondes acoustiques donnant lieu aux vibrations mécaniques misent en jeu dans le cadre de la présente invention correspondent à des valeurs de puissances acoustiques inférieures à 10⁻⁴ W (80 dB), de préférence inférieures à 10⁻⁵ W (70 dB) et de préférence inférieures à 10⁻⁶ W (60 dB).

Selon un exemple, la membrane 6 est configurée pour être mise en mouvement par des vibrations mécaniques ou aériennes issues des ondes acoustiques provenant d'un flux d'air 14 d'un climatiseur ou d'une pompe à chaleur ou d'un ventilateur ou par de l'énergie vibratoire.

Selon un exemple, la bobine 3 comprend une première borne 24 et une deuxième borne 25, la première borne 24 est reliée à une troisième borne 8 et la deuxième borne 25 est reliée à une quatrième borne 23, la troisième borne 8 et la quatrième borne 23 sont configurées pour récupérer une première tension 10 générée en partie par le dispositif de génération d'électricité par transduction électromagnétique 1.

Selon un exemple, au moins l'un parmi le premier aimant 2, le deuxième aimant 4 et le troisième aimant 5 a une forme sensiblement cylindrique de manière à ce que la dimension de sa longueur soit plus grande que celles de sa largeur et hauteur.

Selon un exemple, le dispositif de génération d'électricité par transduction électromagnétique 1 comprend un pont redresseur 11 comprenant quatre diodes 12 configuré pour générer une deuxième tension 26, le pont redresseur 11 est connecté à la troisième borne 8 et à la quatrième borne 23. Le pont redresseur 11 est relié à la troisième borne 8 et à la quatrième borne 23. Étant donné que la première tension 10 récupérée est alternative, il est nécessaire de positionner un pont redresseur 11 de tension. Ce pont redresseur 11 est constitué de quatre diodes 12 qui ont pour fonction de redresser le courant pour obtenir en sortie la valeur absolue du courant d'entrée. Selon un exemple, la membrane 6 est solidaire d'une cellule 27, la cellule 27 est positionnée autour de la membrane 6 de manière à augmenter la surface de réception des ondes acoustiques. Selon un exemple, le boitier 15 comprend un déflecteur 16 ayant une forme pyramidale pour permettre une déviation du flux d'air 14.

Ainsi, la forme pyramidale du déflecteur 16 permet une réception de la quasi-totalité des ondes acoustiques se dirigeant vers la face du boitier 15 portant le déflecteur 16. Elle permet également une diffusion de ces ondes acoustiques de manière importante vers les armatures des supercondensateurs 19.

Selon un exemple, le déflecteur 16 est monté à l'intérieur du boitier 15 sur la face arrière 30. Ainsi, la position frontale du déflecteur 16 par rapport au flux d'air 14 permet une réception et donc une diffusion des ondes acoustiques optimisées. En effet, positionner le déflecteur 16 sur la face arrière 30 permet de dévier une quantité maximale d'ondes acoustiques.

Selon un exemple, le boitier 15 comprend plusieurs supercondensateurs 19 montés en série ou en parallèle.

Selon un exemple, les supercondensateurs 19 sont uniformément répartis au contact des faces latérales 22 du boitier 15.

Ainsi, les supercondensateurs 19 sont positionnés de manière à occuper l'ensemble de l'espace au contact du flux d'air 14.

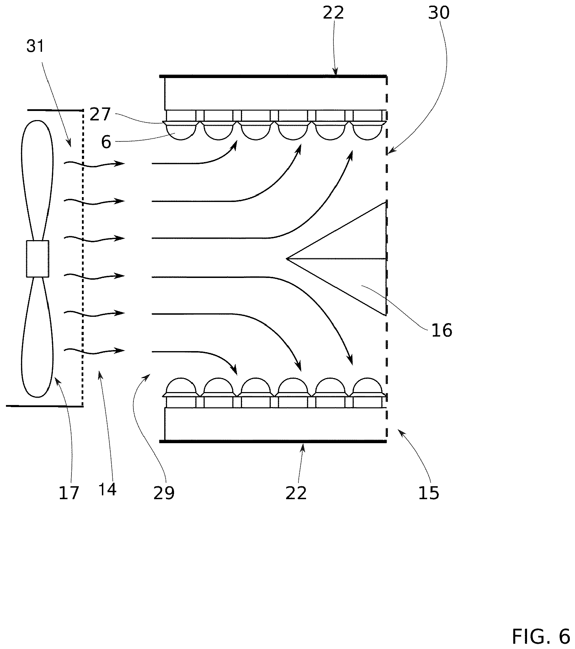

Selon un exemple, les supercondensateurs 19 sont positionnés au contact des faces latérales 22 de manière à ce que la première armature 20 et la deuxième armature 21 des supercondensateurs 19 soient positionnées perpendiculairement à l'une des faces latérales 22 avec laquelle la première armature 20 et la deuxième armature 21 sont en contact (figure 6). Ainsi, la première armature 20 et la deuxième armature 21 des supercondensateurs 19 sont positionnées de manière à être chacune de manière équivalente au contact du flux d'air 14. Selon un exemple, la membrane 6 d'un des dispositifs de génération d'électricité par transduction électromagnétique 1 est solidaire de la première armature 20 et de la deuxième armature 21 d'un des supercondensateurs 19 de manière à ce que ladite membrane 6 joigne la première armature 20 à la deuxième armature 21 d'un des supercondensateurs 19, le troisième aimant 5 est fixé à l'une des quatre faces latérales 22 avec laquelle la première armature 20 et la deuxième armature 21 sont en contact.

Ainsi, l'assemblage entre les dispositifs de génération d'électricité par transduction électromagnétique 1 avec ceux par triboélectricité 18 permet une optimisation de l'espace disponible à l'intérieur du boitier 15.

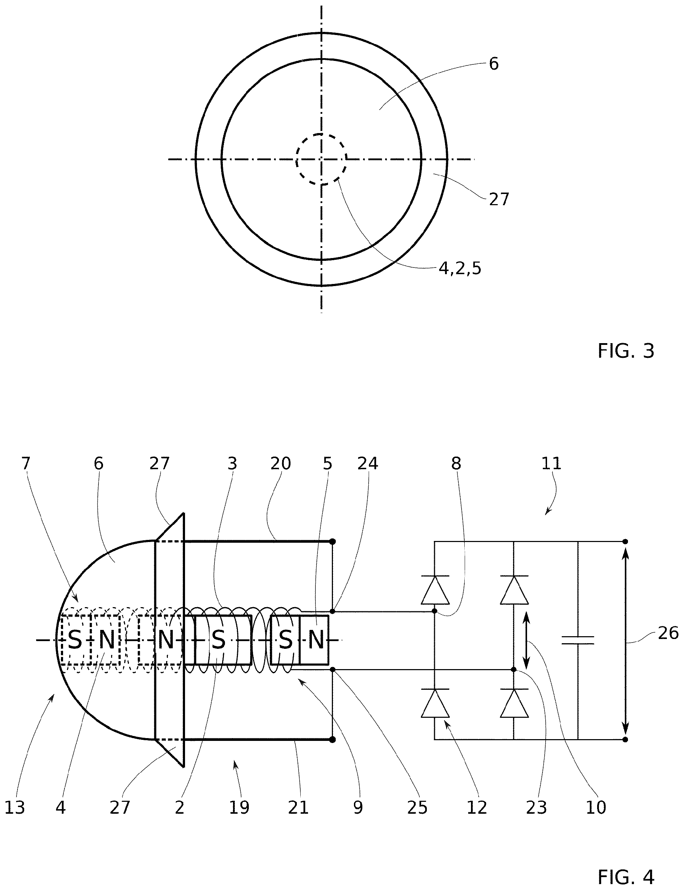

Selon un exemple, la troisième borne 8 est reliée à la première armature 20 et la quatrième borne 23 est reliée à la deuxième armature 21 d'un des supercondensateurs 19 (figure 4), la troisième borne 8 et la quatrième borne 23 sont configurées pour réceptionner la première tension 10, générée en partie par le dispositif de génération d'électricité par triboélectricité 18.

Il est précisé que dans le cadre de la présente invention, le terme « première polarité » désigne indifféremment le pôle nord ou le pôle sud de l'aimant en question. De cette manière, le terme « deuxième polarité opposée » signifie que si la « première polarité » a été désignée comme étant le pôle sud alors la « deuxième polarité opposée » sera le pôle nord et inversement.

Le terme « uniformément répartis » indique que les éléments en question sont positionnés dans l'espace de sorte que l'espace disponible entre deux éléments soit identique, quels que soient les deux éléments considérés.

Le mot « solidaire » désigne le fait qu'un élément qui est solidaire d'un autre est en contact avec cet autre élément et est soumis aux mêmes degrés de liberté que cet autre élément.

L'amont et l'aval, l'entrée, la sortie, en un point donné sont pris en référence au sens de circulation du fluide.

On entend par un paramètre « sensiblement égal/supérieur/inférieur à » une valeur donnée, que ce paramètre est égal/supérieur/inférieur à la valeur donnée, à plus ou moins 10 % près, voire à plus ou moins 5 % près, de cette valeur.

On entend par « climatisation » ou "climatiseur" une installation destinée à rafraîchir ou à réchauffer l'air ambiant d'un espace donné par un cycle de compression/détente d'un fluide caloporteur ou d'un autre. Climatisation, climatiseur et pompe à chaleur sont utilisés de manière indifférenciée dans le cadre de la présente invention. Le flux d'air utilisé par l'invention peut également être produit par un ventilateur associé ou non à un dispositif quelconque.

Dans la présente invention, il est recherché à exploiter les ondes acoustiques d'un flux d'air pour leurs vibrations mécaniques.

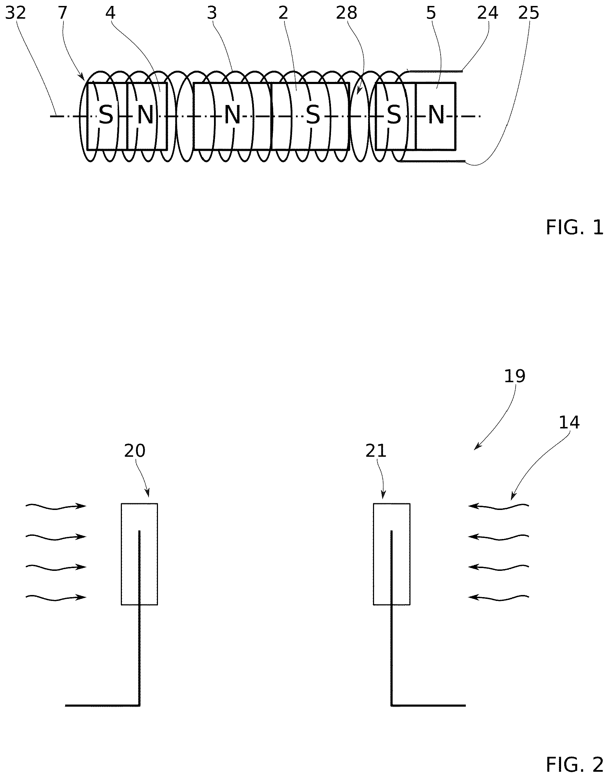

Selon un mode de réalisation, comme illustré en figure 1, le dispositif de génération d'électricité par transduction électromagnétique 1 comprend un premier aimant 2 comprenant une première polarité (pôle Sud ou Nord) et une deuxième polarité opposée (pôle Sud ou Nord) et une bobine 3. Avantageusement, le dispositif de génération d'électricité par transduction électromagnétique 1 comprend un deuxième aimant 4 comprenant une première polarité (pôle Sud ou Nord) et une deuxième polarité opposée (pôle Sud ou Nord) et un troisième aimant 5 comprenant une première polarité (pôle Sud ou Nord) et une deuxième polarité opposée (pôle Sud ou Nord). Avantageusement, le premier aimant 2, le deuxième aimant 4 et le troisième aimant 5 sont agencés suivant l'axe longitudinal 32 de la bobine 3. Avantageusement, le premier aimant 2 est agencé entre le deuxième aimant 4 et le troisième aimant 5. Préférentiellement, le deuxième aimant 4 est agencé à la première extrémité 7 de la bobine 3. Préférentiellement, le troisième aimant 5 est agencé à la deuxième extrémité 9 de la bobine 3. Cette configuration permet de faciliter la mise en oeuvre de la solidarisation entre le deuxième aimant 4 et la bobine 3 et également de l'alignement du premier aimant 2 avec le deuxième aimant 4 et le troisième aimant 5.

Selon un mode de réalisation, la deuxième polarité du deuxième aimant 4 est positionnée face à la deuxième polarité du premier aimant 2 et préférentiellement, la première polarité du troisième aimant 5 est positionnée face à la première polarité du premier aimant 2. Ainsi, par cette configuration, la première polarité et la deuxième polarité du deuxième aimant 4 et du troisième aimant 5 sont inversées par rapport à celles du premier aimant 2. Avantageusement, le premier aimant 2 et deuxième aimant 4 sont agencés de sorte que le premier aimant 2 et le deuxième aimant 4 se repoussent. Avantageusement, le premier aimant 2 et troisième aimant 5 sont agencés de sorte que le premier aimant 2 et le troisième aimant 5 se repoussent.

Ainsi, le premier aimant 2 est configuré pour se mouvoir, autour d'une position moyenne, entre le deuxième aimant 4 et le troisième aimant 5. En effet, comme les polarités du deuxième aimant 4 et du troisième aimant 5 sont inversées par rapport aux polarités du premier aimant 2, les pôles Nord du premier aimant 2 et du deuxième aimant 4 et les pôles Sud du premier aimant 2 et du troisième aimant 5 sont à proximité immédiate. Ainsi, un phénomène de répulsion est à l'origine du mouvement du premier aimant 2 entre le deuxième aimant 4 et le troisième aimant 5. Étant donné qu'il s'agit d'une répulsion, ce mouvement apparait sans contact entre le premier aimant 2 et le deuxième aimant 4 et le troisième aimant 5. Cependant, ce phénomène de répulsion peut entrainer un mouvement de la membrane 6 qui va participer à la génération de l'électricité. Le phénomène de répulsion ainsi décrit va permettre une variation de positions entre le premier aimant 2 et la bobine 3 plus importante que si cette variation était uniquement due à l'entrainement de la bobine 3 par la membrane 6 avec le premier aimant 2 immobile. Étant donné que la tension produite aux bornes de la bobine 3 est proportionnelle à la dérivée temporelle du flux magnétique variable, le phénomène va permettre d'obtenir une tension plus importante. Également, la tension générée aux bornes de la bobine 3 due au mouvement dans la bobine 3 par rapport au premier aimant 2 et au troisième aimant 5 et celle dues au mouvement du premier aimant 2 entre le deuxième aimant 4 et le troisième aimant 5 lorsqu'elles s'ajoutent entraînent bien entendu une tension générée plus importante que s'il y avait que le premier aimant 2 de positionné.

Avantageusement, le deuxième aimant 4 est fixé à la bobine 3. De cette manière, le deuxième aimant 4 est solidaire de la bobine 3 et par conséquent, lors d'un mouvement de la bobine 3, le deuxième aimant 4 est entrainé avec la bobine 3. La fixation entre le deuxième aimant 4 et la bobine 3 peut être réalisée par plusieurs moyens, par collage ou par attache avec des fils. La fixation peut être réalisée entre la surface du deuxième aimant 4 en contact avec la bobine 3, c'est-à-dire par exemple sur une surface courbe du deuxième aimant 4 comme illustré en figure 4. La bobine 3 et le deuxième aimant 4 sont agencés de manière à ce qu'ils soient mobiles par rapport au premier aimant 2 par des vibrations mécaniques.

Avantageusement, le premier aimant 2 n'est pas solidaire de la bobine 3. Avantageusement, le premier aimant 2 n'est pas solidaire du deuxième aimant 4. Avantageusement, selon l'invention, le premier aimant 2 est configuré pour osciller entre le deuxième aimant 4 et le troisième aimant 5.

Le troisième aimant 5 est immobile par rapport à la bobine 3. Ainsi, lors d'un mouvement de la bobine 3, le troisième aimant 5 reste à sa position initiale.

Selon une possibilité préférée, la bobine 3 s'étend suivant un axe longitudinal 32 entre une première extrémité 7 de la bobine 3 et une deuxième extrémité 9 de la bobine. La bobine 3 comprend un noyau 28. Le noyau 28 correspond au volume intérieur de la bobine 3. Le noyau 28 peut rester vide, la bobine 3 est dite à noyau air ou bien le noyau 28 reçoit un élément solide.

Selon un mode de réalisation particulier, comme on peut le voir en figure 1, le premier aimant 2, le deuxième aimant 4 et le troisième aimant 5 du dispositif de génération d'électricité par transduction électromagnétique 1 sont positionnés au moins en partie dans le noyau 28 de la bobine 3. En effet, sur cette figure, il peut être observé que le premier aimant 2 et le deuxième aimant 4 sont entièrement positionnés dans la bobine 3 alors que le troisième aimant 5 est inclus qu'en partie dans la bobine 3.

Avantageusement, au moins l'un parmi le premier aimant 2, le deuxième aimant 4 et le troisième aimant 5 du dispositif de génération d'électricité par transduction électromagnétique 1 présente une forme cylindrique pouvant s'étendre longitudinalement comme par exemple illustré à la figure 1. Cette géométrie permet de faciliter le positionnement des aimants entre eux et notamment leur orientation selon leur pôle Nord et leur pôle Sud.

Selon un autre mode de réalisation particulier, le dispositif de génération d'électricité par transduction électromagnétique 1 comprend une membrane 6 solidaire de la bobine 3, plus précisément liée à la première extrémité 7 de la bobine 3. Ainsi, préférentiellement, le deuxième aimant 4 est fixé à la première extrémité 7 de la bobine et la membrane 6 est fixée à la première extrémité 7 de la bobine 3. Lors de mouvement de la membrane 6, étant donné la configuration du dispositif, la bobine 3 et le deuxième aimant 4 entrent également en mouvement. Selon une possibilité, la membrane 6 peut avoir une forme courbe, préférentiellement une surface concave au regard de laquelle est positionnée la bobine 3 et une surface convexe opposée destinée à faire face à un flux d'air 14. De cette manière, la membrane 6 est optimisée pour réceptionner les ondes acoustiques.

Avantageusement, la membrane 6 du dispositif de génération d'électricité par transduction électromagnétique 1 est configurée pour être mise en mouvement par des vibrations mécaniques issues notamment des ondes acoustiques d'un flux d'air 14 d'un climatiseur ou d'une pompe à chaleur (figure 6) ou d'un ventilateur. Selon un mode de réalisation avantageux, la membrane 6 est configurée pour être disposée non parallèlement à un flux d'air 14, c'est-à-dire de manière oblique avec le flux d'air. Ainsi, la membrane 6 du dispositif de génération d'électricité par transduction électromagnétique 1 est avantageusement positionnée sur le parcours des ondes acoustiques.

Cette membrane 6 a la capacité de réceptionner l'onde acoustique et de réémettre une partie réfléchie de cette onde et de transmettre une autre partie. Une partie de l'onde acoustique est également absorbée en énergie mécanique mettant ainsi en mouvement la membrane 6.

La membrane 6 et la première extrémité 7 de la bobine 3 sont solidarisées par exemple par collage ou par attache avec un fils. Selon un mode de réalisation illustré à la figure 4, la membrane 6 et la première extrémité 7 de la bobine sont solidarisées par la circonférence de la première extrémité 7 de la bobine 3, en contact avec la membrane 6.

À titre d'exemple, la membrane 6 peut être en titane en raison de sa bonne tenue à la corrosion et de son importante résistance mécanique à des températures jusqu'à 600 °C et également jusqu'à des températures cryogéniques. L'épaisseur de la membrane 6 est de l'ordre de quelques micromètres, ceci permettant qu'en cas de contact entre la membrane 6 et les ondes acoustiques un déplacement de la bobine 3 et du deuxième aimant 4 est possible.

De manière préférée, comme schématisée en figure 4, la bobine 3 du dispositif de génération d'électricité par transduction électromagnétique 1 comprend une première borne 24 et une deuxième borne 25. Le dispositif de génération d'électricité par transduction électromagnétique 1 produit une première tension 10 entre la première borne 24 et la deuxième borne 25.

Le premier aimant 2, le deuxième aimant 4 et le troisième aimant 5 émettent un flux de champ magnétique constant. Grâce à la vibration de la membrane 6 et donc au déplacement de la bobine 3, sous l'effet des ondes acoustiques, produites par un flux d'air 14 notamment issu de l'unité extérieure 31, le flux de champ magnétique varie au cours du temps et génère donc un courant et ainsi une première tension 10 aux bornes de la bobine 3. L'oscillation du premier aimant 2 permet d'augmenter la première tension 10.

Avantageusement, la première borne 24 et la deuxième borne 25 sont configurées pour permettre à la bobine 3 de translater selon l'axe longitudinal 32 de la bobine 3. À titre d'exemple, le dispositif comprend des fils électriques de sortie de la première borne 24 et de la deuxième borne 25 ayant une longueur permettant un mouvement non contraint de la bobine 3.

Selon une possibilité, la première borne 24 est reliée à une troisième borne 8 et la deuxième borne 25 est reliée à une quatrième borne 23. La troisième borne 8 et la quatrième borne 23 faisant partie d'un pont redresseur 11.

Selon une possibilité, comme illustré en figure 4, le dispositif de génération d'électricité par transduction électromagnétique 1 comprend un pont redresseur 11 comprenant quatre diodes 12. Le point redresseur 11 est destiné à transformer la première tension 10 alternative en une deuxième tension 26 continue. Sur cette figure, on peut observer que le pont redresseur 11 est connecté à la bobine 3 au niveau de la première borne 24 et la deuxième borne 25. La première tension 10 qui est alternative est convertie en tension continue par le pont redresseur 11 pour obtenir la deuxième tension 26. Le pont redresseur 11 comprend une première branche recevant deux diodes 12 montées en série et avantageusement une deuxième branche, parallèle à la première branche, recevant deux diodes 12. Selon une possibilité, le pont redresseur 11 comprend un condensateur monté en parallèle des diodes 12, plus précisément monté sur une troisième branche montée en parallèle de la première et de la deuxième branche.

Grâce à cette configuration, la tension de sortie est la valeur absolue de la tension d'entrée. En effet, lors de la phase positive de la première tension 10, les deux diodes 12 ayant une tension d'anode supérieure à la tension de la cathode conduisent le courant alors que les deux diodes 12 remplissant la condition inverse bloqueront le courant. Le phénomène inverse se produira pour l'alternance positive. Il en résulte ainsi la possibilité de discriminer le courant entrant selon son signe pour ensuite obtenir la valeur absolue de la tension d'entrée. Le condensateur placé en parallèle par rapport aux diodes 12 a une fonction de lissage de la tension et permet donc d'éviter des chutes de tension qui pourraient survenir en raison du courant alternatif réceptionné. En effet, lorsque la tension à ses bornes augmente, le condensateur se charge et lorsque la tension à ses bornes diminue, le condensateur se décharge.

De manière préférée, le dispositif de génération d'électricité par transduction électromagnétique 1 comprend une cellule 27. La cellule 27 peut décrire une couronne circulaire dont l'épaisseur est plus petite que son rayon intérieur. Le facteur entre l'épaisseur de la cellule 27 et son rayon intérieur peut être compris entre 10 et 100. La cellule 27 est avantageusement positionnée autour de la bobine 3. La membrane 6 peut préférentiellement s'étendre jusqu'à la cellule 27 de manière à accroitre la surface de réception des ondes acoustiques. La membrane 6 est par exemple solidaire de la cellule 27 par son pourtour, plus précisément sur sa circonférence dans le cas où la membrane 6 présente une forme en demi-sphère. Dans le cas où la cellule 27 est une couronne circulaire et où la membrane 6 est une demi-sphère et également dans le cas général, la cellule 27 est positionnée par rapport à la membrane de manière qu'elle forme avec la membrane 6 un angle compris entre 90° et 130° (l'angle étant pris entre la cellule et la tangente à la membrane au niveau du point de contact entre la membrane et la cellule).

La cellule 27 peut avoir une forme circulaire ou toutes autres formes permettant à son pourtour de se lier au pourtour de la membrane 6, ceci comme illustré en figures 3 et 4. La fixation entre la cellule 27 et la membrane 6 peut être réalisée par collage ou par attache avec un fil.

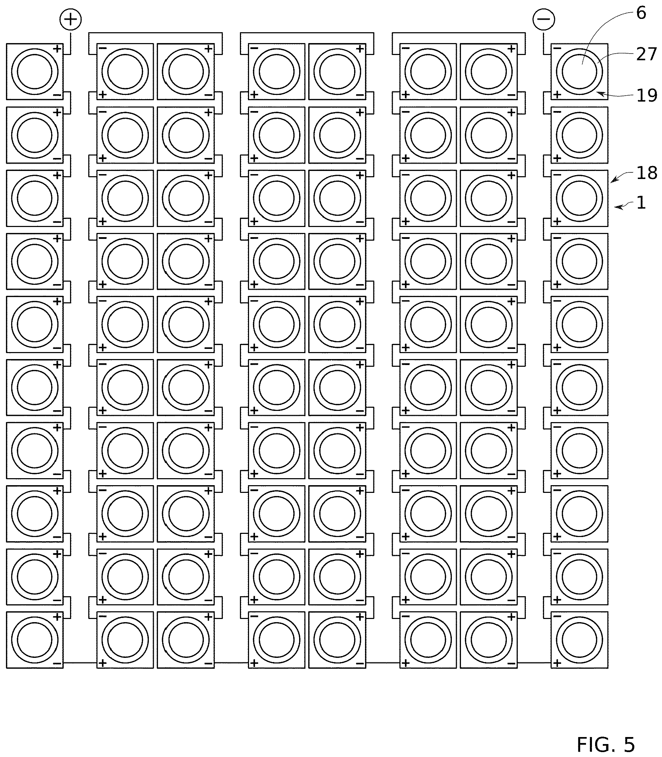

Selon un mode de réalisation préféré, l'invention concerne un système de génération d'électricité par transduction électromagnétique comprenant une pluralité de dispositif de génération d'électricité par transduction électromagnétique 1 montés en série et/ou en parallèle. La figure 5 illustre un système de génération d'électricité par transduction électromagnétique 1 comprenant un panneau composé d'une pluralité de dispositif de génération d'électricité par transduction électromagnétique 1 raccordés en série. Chaque panneau comprend une sortie de tension continue. Le système comprend avantageusement une pluralité de panneau pouvant être montés en série ou en parallèle.

Le dispositif selon l'invention peut être utilisé pour les installations de climatisation, les pompes à chaleur et les groupes eaux glacées industriels.

Le dispositif de génération d'électricité par transduction électromagnétique 1 selon l'invention s'applique avantageusement aux installations de climatisation ou pompes à chaleur ou d'un ventilateur. De manière préférée, le climatiseur comprend une unité extérieure 31 et préférentiellement également une unité intérieure, non représentée, reliées par des liaisons frigorifiques. L'unité intérieure est destinée à être agencée à l'intérieur d'un bâtiment, d'un appartement, d'un espace dont l'air doit être thermiquement traité. L'unité extérieure 31 est destinée à être agencée à l'extérieur du bâtiment, de l'appartement, ou de l'espace dont l'air doit être traité thermiquement.

Classiquement, l'unité intérieure comprend un évaporateur destiné à évaporer le fluide caloporteur circulant entre l'unité intérieure et l'unité extérieure 31 par les liaisons frigorifiques. L'installation de climatisation, ou la pompe à chaleur, préférentiellement, l'unité extérieure 31 comprend un condenseur destiné à condenser un fluide caloporteur. L'installation de climatisation, ou la pompe à chaleur, préférentiellement, l'unité extérieure 31 comprend également un compresseur destiné à comprimer le fluide caloporteur avant son entrée dans le condenseur 6. L'installation de climatisation, ou la pompe à chaleur, préférentiellement, l'unité extérieure 31 comprend également un détendeur destiné à détendre le fluide caloporteur après sa sortie du condenseur et avant son entrée dans l'évaporateur.

Selon une possibilité, l'unité extérieure 31 est formée d'un bloc présentant une façade avant, une façade arrière, opposée à la façade avant, deux façades latérales, un dessous et un dessus. Classiquement, le dessus et le dessous sont des parois pleines, tandis que la façade avant, la façade arrière, et les deux façades latérales sont configurées pour laisser passer un flux d'air 14. Préférentiellement, la façade avant est destinée à permettre un flux d'air 14 sortant, tandis que la façade arrière et les façades latérales sont destinées à permettre un flux d'air 14 entrant. Le flux d'air 14 est avantageusement généré par un ventilateur 17 agencé en façade avant de l'unité extérieure 31.

Selon un mode de réalisation, le dispositif de génération d'électricité par transduction électromagnétique 1 est configuré pour être agencé devant ou dans une unité extérieure 31, préférentiellement au regard de la façade avant et/ou dans le flux d'air 14 sortant de l'unité extérieure 31.

Selon un aspect, l'invention concerne un boitier 15 configuré pour être agencé au regard du flux d'air 14 sortant d'une unité extérieure 31.

Selon une possibilité, le boitier 15 comprend une face avant 29 et une face arrière 30 et plusieurs faces latérales 22, par exemple 4. Le boitier 15 peut avoir une longueur de 80 cm, une largeur de 20 cm et une hauteur de 40 mm. La face avant 29 est positionnée au regard de l'unité extérieure 31 de sortie d'air d'un climatiseur ou d'une pompe à chaleur. Le boitier 15 peut avoir une structure en tôle.

Selon une autre possibilité, le boitier 15 comprend une face avant 29, une face arrière 30 et une face latérale 22 par exemple de forme circulaire ou ovale.

À titre préféré, la face avant 29 est vide ou est formée par un grillage de sorte à permettre la circulation du flux d'air 14 issu de l'unité extérieure 31.

À titre préféré, la face arrière 30, avantageusement opposée à la face avant 29 est vide ou est formée par un grillage de sorte à permettre la circulation du flux d'air 14 circulant dans le boitier 15.

Selon un mode de réalisation, le boitier 15 comprend au moins un dispositif de génération d'électricité par transduction électromagnétique 1.

Préférentiellement, comme illustré en figure 6, le boitier 15 comprend un déflecteur 16 du flux d'air 14 sortant. Le déflecteur 16 est configuré pour assurer une déviation de flux d'air 14 sortant. Préférentiellement les déviations du flux d'air se font dans différentes directions pour avoir un maximum de contact du flux d'air 14 et donc des ondes acoustiques avec le ou les dispositifs de génération d'électricité par transduction électromagnétique 1 et notamment avec la ou les membranes 6, ceci permettant de générer un maximum de vibration et donc une production d'énergie importante. À titre d'exemple préféré, le déflecteur 16 présente une forme pyramidale. La forme en pyramide du déflecteur 16 peut comporter un nombre quelconque de côtés supérieur à trois. Le déflecteur 16 peut également avoir toute autre forme présentant plusieurs faces, comme un polyèdre régulier, un parallélépipède, un prisme, un cylindre, mais également une forme conique.

Ainsi, les surfaces du déflecteur 16, lorsqu'elles reçoivent une onde acoustique, en réémettent une partie, en transmettent une partie et en absorbent une partie. Ainsi, la partie réémise est dirigée vers les dispositifs de génération d'électricité par transduction électromagnétique 1. Selon un mode de réalisation préféré, le déflecteur 16 est monté dans le volume intérieur du boitier 15, avantageusement sur la face arrière 30. Ainsi, de cette manière, le déflecteur 16 est parfaitement en face du flux d'air 14 sortant de l'unité extérieure 31 lui permettant de dévier le plus d'ondes acoustiques.

Selon un aspect, l'invention concerne un dispositif de génération d'électricité par triboélectricité 18.

Selon une possibilité illustrée à la figure 2, un supercondensateur 19 du dispositif de génération d'électricité par triboélectricité 18 comprend une première armature 20 et une deuxième armature 21. À titre d'exemple, la première armature 20 et la deuxième armature 21 sont en aluminium. Préférentiellement, la première armature 20 et la deuxième armature 21 sont recouvertes de charbon actif et sont ensuite imprégnées d'électrolyte. Les surfaces ainsi obtenues sont poreuses. La porosité des surfaces permet d'augmenter la surface par unité de volume disponible pour les ions, les pores étant de petites zones dont la taille est de l'ordre du nanomètre. La première armature 20 et la deuxième armature 21 sont séparées par une membrane isolante et poreuse, ceci pour assurer la conduction ionique tout en empêchant un court-circuit entre les armatures. Une double couche électrochimique, dont les deux couches sont séparées que par quelques dixièmes de nanomètres, se développe sur chaque armature. Ainsi, un supercondensateur 19 peut être vu comme l'association de deux condensateurs en série, l'un à l'armature positive et l'autre à l'armature négative.

Des poussières contenues dans le flux d'air 14 sortant vont par frottement entre elles se charger positivement ou négativement. Les charges électrostatiques vont ainsi être attirées par les armatures du supercondensateur 19 selon leur polarité pour créer ainsi un courant statique plus important que celui généré initialement.

La double couche électrochimique se développant sur chaque électrode génère une tension qui peut ensuite être réceptionnée. L'énergie réceptionnée est proportionnelle à la capacité du supercondensateur 19 et est d'autant plus grande que la surface de la double couche est importante et que son épaisseur est faible, une surface de la double couche plus grande étant obtenue avec un matériau poreux.

Le dispositif de génération d'électricité par triboélectricité 18 est avantageusement configuré pour être placé dans le flux d'air 14 sortant, d'un climatiseur ou d'une pompe à chaleur (figure 6) ou d'un ventilateur. De la même manière que pour le dispositif de génération d'électricité par transduction électromagnétique 1, ce dispositif par sa position peut réceptionner un maximum du flux d'air 14 sortant.

De manière préférée, comme on peut le voir en figure 5, le boitier 15 comprend une pluralité de supercondensateurs 19 montés en série ou en parallèle.

Avantageusement, les supercondensateurs 19 sont agencés sur la ou les faces latérales 22 du boitier 15 (figure 6). Préférentiellement, ils sont positionnés de manière homogène sur les faces latérales 22 du boitier 15 (figure 6).

En raison de leur répartition uniforme, ces supercondensateurs 19 peuvent réceptionner un maximum du flux d'air 14 sortant de la sortie d'air.

Selon un mode de réalisation préféré, dans le boitier 15, les supercondensateurs 19 sont agencés de manière à ce que la première armature 20 et la deuxième armature 21 des supercondensateurs 19 soient positionnées orthogonalement par rapport à l'une des faces latérales 22. Ainsi, de cette manière, aucune des deux armatures d'un supercondensateur 19 n'est avantagée par sa position pour réceptionner une quantité d'air plus importante.

Selon un mode de réalisation, le dispositif de génération d'électricité par transduction électromagnétique 1 et le dispositif de génération d'électricité par triboélectricité 18 sont associés dans une installation de climatisation, ou une pompe à chaleur ou dans un boitier 15. De cette manière, le courant généré par le dispositif de génération d'électricité par transduction électromagnétique 1 va recharger le supercondensateur 19 du dispositif de génération d'électricité par triboélectricité 18.

Il est également possible que les armatures soient positionnées de manière à ce qu'elles soient orthogonales à l'axe longitudinal 32 de la bobine 3. Par exemple, l'une des armatures est solidaire de l'une des faces latérales 22 du boitier 15 (figure 5).

Selon un mode de réalisation, la membrane 6 du dispositif de génération d'électricité par transduction électromagnétique 1 est solidaire de la première armature 20 et de la deuxième armature 21 d'un des supercondensateurs 19. Avantageusement, la membrane 6 est solidaire de la première armature 20 et de la deuxième armature 21 ceci afin que ladite membrane 6 joigne la première armature 20 à la deuxième armature 21 d'un des supercondensateurs 19 (figure 4). Dans cette configuration, le troisième aimant 5 est fixé à l'une des faces latérales du boitier 15 par l'une de ses extrémités, pôle Sud ou pôle Nord, selon la configuration de l'ensemble. Cette configuration permet de limiter la perte de place afin d'exploiter un maximum le flux d'air 14 sortant. Ainsi, la configuration globale du dispositif de génération d'électricité par transduction électromagnétique 1 permet lors du mouvement de la membrane 6, qui est fixée à une extrémité de la bobine 3 qui est elle-même fixée au deuxième aimant 4, de mettre également en mouvement la bobine 3 et le deuxième aimant 4 alors que le troisième aimant 5 est fixé au boitier 15 et est donc statique par rapport au mouvement de l'ensemble membrane 6, bobine 3 et deuxième aimant 4. La fixation du troisième aimant 5 sur le boitier 15 peut être réalisée par collage ou par attache par des fils. La fixation est réalisée entre la surface du troisième aimant 5 au contact du boitier 15 et la partie du boitier 15 au contact du troisième aimant 5. Dans le cas où les supercondensateurs 19 sont positionnés orthogonalement à l'alignement des aimants, la membrane 6 est uniquement reliée à la bobine 3 et au deuxième aimant 4. Il est également possible que la base de la membrane 6 ait un diamètre égal au diamètre de la bobine 3. De cette manière, la membrane 6 couvrira une surface réduite.

Selon un mode de réalisation préférentiel, dans le boitier 15, la troisième borne 8 est connectée à la première armature 20 et la quatrième borne 23 est connectée à la deuxième armature 21 d'un des supercondensateurs 19 (figure 4), ceci afin de pouvoir réceptionner une première tension 10 en partie générée par le dispositif de génération d'électricité par triboélectricité 18.

Selon un mode de réalisation préféré, le dispositif de génération d'électricité par transduction électromagnétique 1 et le dispositif de génération d'électricité par triboélectricité 18 peuvent être sous forme de systèmes gainables modulables de façon à être associés individuellement. Les raccords entre les différents dispositifs peuvent être réalisés en série ou en parallèle.

Selon un mode de réalisation, afin de réceptionner l'énergie produite, un chargeur et une batterie de stockage formant un module de stockage peuvent être positionnés en sortie des dispositifs de génération d'électricité par transduction électromagnétique 1 et des dispositifs de génération d'électricité par triboélectricité 18 ou en sortie de climatiseur. Un convertisseur hybride formant un module de conversion peut être positionné à la suite du chargeur et de la batterie de stockage pour convertir l'énergie obtenue en un courant alternatif.

Par ailleurs, selon un mode de réalisation, le système de production d'électricité selon l'invention comprend avantageusement un module de commande et/ou un module de conversion et/ou un module de puissance et/ou un module de stockage.

Le module de commande est configuré pour commander et gérer les charges/décharges des supercondensateurs 19 et éventuellement des batteries de stockage. Le module de commande peut être raccordé à un automate programmable pour la gestion des contacts relais permettant la charge ou la décharge des supercondensateurs dans les batteries ou la réinjection de l'énergie emmagasinée dans le réseau.

Le module de conversion comprend un convertisseur hybride pour l'alimentation du climatiseur ou de la pompe à chaleur ou d'un ventilateur et pour la réinjection de l'énergie produite dans le réseau. Il permet aussi la recharge classique des batteries de stockage d'énergie.

À titre d'exemple, la bobine 3 possède une résistance de 5 Ω et un diamètre intérieur de 20 mm, un diamètre extérieur de 20,2 mm et un nombre de spires de 250. La section du fil conducteur la constituant peut être de 0,2 mm².

À titre d'exemple, le premier aimant 2, le deuxième aimant 4 et le troisième aimant 5 peuvent être des aimants en néodyme, ayant ainsi une capacité à générer des inductions magnétiques importantes. Le premier aimant 2, le deuxième aimant 4 et le troisième aimant 5 peuvent être également en ferrite. Le premier aimant 2, le deuxième aimant 4 et le troisième aimant 5 ne sont pas forcément tous les trois dans le même matériau. Ainsi, deux de ces trois aimants peuvent être en ferrite et l'autre en néodyme ou inversement.

À titre d'exemple, le premier aimant 2, le deuxième aimant 4 et le troisième aimant 5 ont un diamètre de 16 mm et une longueur de 25 mm. Dans une autre configuration, le premier aimant 2 peut avoir un diamètre de 16 mm et une longueur de 25 mm alors que le deuxième aimant 4 et le troisième aimant 5 peuvent avoir respectivement un diamètre de 16 mm, une longueur de 1 mm, un diamètre de 16 mm et une longueur de 2 mm. Ainsi, dans cette configuration, le premier aimant 2 est plus puissant que les deux autres aimants. Ces dimensions sont sélectionnées de manière à ce que les pressions exercées par les ondes acoustiques soient capables de mettre les aimants en oscillation.

Théoriquement par la loi de Faraday, le dispositif de génération d'électricité par transduction électromagnétique 1 peut produire une puissance approximative de 492 mW et donc cent dispositifs peuvent en produire 49,2 W.

À titre d'exemple, les membranes 6 utilisées peuvent avoir un diamètre de 20 mm et peuvent être capables de produire une tension de 16 mV et une intensité de 10 mA chacune dans les conditions de l'expérience, soit une puissance approximative de 160 mW chacune. Le diamètre de la membrane 6 par rapport au diamètre de la bobine 3 est déterminé de façon à ce que la membrane 6 puisse assurer un déplacement suffisant de la bobine 3.

À titre d'exemple, le condensateur du pont redresseur 11 peut avoir une capacité électrique de 200 µF pour une tension de 1 V.

À titre d'exemple, la membrane 6 est positionnée obliquement de manière à ce que l'orientation de la cellule 27 par rapport à l'alignement des aimants forme un angle compris entre 40° et 90° en considérant le sens trigonométrique.

À titre d'exemple, le boitier 15 présente une longueur de 80 cm, une hauteur de 40 cm et une largeur de 20 cm.

À titre d'exemple, l'épaisseur du charbon actif du dispositif de génération d'électricité par triboélectricité 18 est de l'ordre de 0,1 mm et la surface effective peut atteindre 2000 m² pour 1 g de charbon actif.

L'invention n'est pas limitée aux modes de réalisations précédemment décrits et s'étend à tous les modes de réalisation couverts par les l'invention.

### Liste de références :

- 1.: Dispositif de génération d'électricité par transduction électromagnétique
- 2.: Premier aimant
- 3.: Bobine
- 4.: Deuxième aimant
- 5.: Troisième aimant
- 6.: Membrane
- 7.: Première extrémité
- 8.: Troisième borne
- 9.: Deuxième extrémité
- 10.: Première tension
- 11.: Pont redresseur
- 12.: Diodes
- 13.: Transducteurs électromagnétiques
- 14.: Flux d'air
- 15.: Boitier
- 16.: Déflecteur
- 17.: Ventilateur
- 18.: Dispositif de génération d'électricité par triboélectricité
- 19.: Supercondensateur
- 20.: Première armature
- 21.: Deuxième armature
- 22.: Face latérale
- 23.: Quatrième borne
- 24.: Première borne
- 25.: Deuxième borne
- 26.: Deuxième tension
- 27.: Cellule
- 28.: Noyau
- 29.: Face avant
- 30.: Face arrière
- 31.: Unité extérieure
- 32.: Axe longitudinal

## Revendications

1. Dispositif de génération d'électricité par transduction électromagnétique (1) comprenant un premier aimant (2) comprenant une première polarité et une deuxième polarité opposée et une bobine (3) **caractérisé en ce qu'**il comprend un deuxième aimant (4) comprenant une première polarité et une deuxième polarité opposée et un troisième aimant (5) comprenant une première polarité et une deuxième polarité opposée, la deuxième polarité du deuxième aimant (4) étant positionné au regard de la deuxième polarité du premier aimant (2) et la première polarité du troisième aimant (5) étant positionnée au regard de la première polarité du premier aimant (2) de manière à ce que la première polarité et la deuxième polarité du deuxième aimant (4) soient opposées à la première polarité et à la deuxième polarité du premier aimant (2) et à ce que la première polarité et la deuxième polarité du troisième aimant (5) soient opposées à la première polarité et à la deuxième polarité du premier aimant (2), le deuxième aimant (4) est fixé à la bobine (3) de sorte à suivre son déplacement et le troisième aimant (5) est immobile par rapport à la bobine (3), la bobine (3) et le deuxième aimant (4) sont configurés pour être mobiles par rapport au premier aimant (2) par des vibrations mécaniques, le premier aimant (2) est configuré pour osciller entre le deuxième aimant (4) et le troisième aimant (5).

2. Dispositif de génération d'électricité par transduction électromagnétique (1) selon la revendication précédente dans lequel la bobine (3) s'étend suivant un axe longitudinal (32) entre une première extrémité (7) de la bobine (3) et une deuxième extrémité (9) de la bobine (3), la bobine (3) comprend un noyau (28), le premier aimant (2), le deuxième aimant (4) et le troisième aimant (5) étant positionnés au moins en partie dans le noyau (28) de la bobine (3).

3. Dispositif de génération d'électricité par transduction électromagnétique (1) selon la revendication précédente comprenant une membrane (6) solidaire de la première extrémité (7) de la bobine (3) et configurée pour être mise en mouvement par des vibrations mécaniques ou aériennes issues des ondes acoustiques provenant d'un flux d'air (14) d'un climatiseur ou d'une pompe à chaleur ou d'un ventilateur.

4. Dispositif de génération d'électricité par transduction électromagnétique (1) selon la revendication précédente dans lequel la membrane (6) est solidaire d'une cellule (27), la cellule (27) est positionnée autour de la membrane (6) de manière à augmenter la surface de réception des ondes acoustiques.

5. Dispositif de génération d'électricité par transduction électromagnétique (1) selon l'une des revendications précédentes dans lequel la bobine (3) comprend une première borne (24) et une deuxième borne (25), la première borne (24) est reliée à une troisième borne (8) et la deuxième borne (25) est reliée à une quatrième borne (23), la troisième borne (8) et la quatrième borne (23) sont configurées pour récupérer une première tension (10) générée en partie par le dispositif de génération d'électricité par transduction électromagnétique (1), et préférentiellement comprenant un pont redresseur (11) comprenant quatre diodes (12) configuré pour générer une deuxième tension (26), le pont redresseur (11) est connecté à la troisième borne (8) et à la quatrième borne (23).

6. Dispositif de génération d'électricité par transduction électromagnétique (1) selon l'une quelconque des revendications précédentes dans lequel au moins l'un parmi le premier aimant (2), le deuxième aimant (4) et le troisième aimant (5) a une forme sensiblement cylindrique.

7. Boitier (15) configuré pour être positionné au regard d'une unité extérieure (31) de sortie d'air d'un climatiseur ou d'une pompe à chaleur ou d'une sortie d'air d'un ventilateur **caractérisé en ce qu'**il comprend un dispositif de génération d'électricité par transduction électromagnétique (1) selon l'une quelconque des revendications 1 à 6, le boitier (15) comprend quatre faces latérales (22), une face avant (29) et une face arrière (30), la face avant (29) est positionnée au regard d'un flux d'air (14) d'un climatiseur ou d'une pompe à chaleur ou d'un ventilateur.

8. Boitier (15) selon la revendication précédente comprenant un déflecteur (16) ayant une forme pyramidale pour permettre une déviation du flux d'air (14).

9. Boitier (15) selon la revendication précédente dans lequel le déflecteur (16) est monté à l'intérieur du boitier (15) sur la face arrière (30).

10. Boitier (15) selon l'une quelconque des revendications 7 à 9 comprenant un dispositif de génération d'électricité par triboélectricité (18) comprenant au moins un supercondensateur (19), le au moins supercondensateur (19) comprend une première armature (20) et une deuxième armature (21) et est configuré pour être placé au regard du flux d'air (14) d'un climatiseur ou d'une pompe à chaleur.

11. Boitier (15) selon la revendication précédente comprenant plusieurs supercondensateurs (19) montés en série ou en parallèle et préférentiellement les supercondensateurs (19) sont uniformément répartis au contact des quatre faces latérales (22) du boitier (15) et préférentiellement sont positionnés au contact des quatre faces latérales (22) de manière à ce que la première armature (20) et la deuxième armature (21) des supercondensateurs (19) soient positionnées perpendiculairement à l'une des quatre faces latérales (22) avec laquelle la première armature (20) et la deuxième armature (21) sont en contact.

12. Boitier (15) selon l'une quelconque des revendications 10 ou 11 dans lequel la membrane (6) d'un des dispositifs de génération d'électricité par transduction électromagnétique (1), selon la revendication 3, est solidaire de la première armature (20) et de la deuxième armature (21) d'un des supercondensateurs (19) de manière à ce que ladite membrane (6) joigne la première armature (20) à la deuxième armature (21) d'un des supercondensateurs (19), le troisième aimant (5) est fixé à l'une des quatre faces latérales (22) avec laquelle la première armature (20) et la deuxième armature (21) sont en contact.

13. Boitier (15) selon l'une quelconque des revendications 10 à 12 comprenant un dispositif de génération d'électricité par transduction électromagnétique (1), selon la revendication 5, dans lequel la troisième borne (8) est reliée à la première armature (20) et la quatrième borne (23) est reliée à la deuxième armature (21) d'un des supercondensateurs (19), la troisième borne (8) et la quatrième borne (23) sont configurées pour réceptionner la première tension (10) générée en partie par le dispositif de génération d'électricité par triboélectricité (18).

14. Climatiseur comprenant une unité extérieure (31) **caractérisée en ce qu'**elle comprend un dispositif de génération d'électricité par transduction électromagnétique (1) selon l'une quelconque des revendications 1 à 6.

15. Climatiseur selon la revendication précédente comprenant un boitier (15) selon l'une quelconque des revendications 10 à 13.
